## Europäisches Patentamt
## European Patent Office
## Office européen des brevets

(11) Publication number: **0 006 749**
**B1**

(12) **EUROPEAN PATENT SPECIFICATION**

(45) Date of publication of patent specification: **22.02.84**

(51) Int. Cl.³: **G 01 N 21/53**

(21) Application number: **79301225.3**

(22) Date of filing: **25.06.79**

(54) Method and apparatus for measuring gas, including standardisation.

(30) Priority: **26.06.78 US 919237**
**26.06.78 US 919442**

(43) Date of publication of application:
**09.01.80 Bulletin 80/1**

(45) Publication of the grant of the patent:
**22.02.84 Bulletin 84/8**

(84) Designated Contracting States:
**AT CH DE FR GB IT SE**

(56) References cited:
**CH - A - 567 721**
**DE - A - 2 430 672**
**US - A - 3 895 233**

**ADVANCES IN INSTRUMENTATION, vol. 31, no. 4, 1974 PITTSBURGH (US) L.F. GILBERT: "Carbon Monoxide (Co) Analyzer Saves Money", pages 883/1-883/8**

(73) Proprietor: **MEASUREX CORPORATION**
**One Results Way**
**Cupertino, California 95014 (US)**

(72) Inventor: **Boissevain, Mathew G**
**27181 Sherlock Road**
**Los Altos Hills California 94022 (US)**
Inventor: **Typpo, Pekka Matti**
**10301 Richwood Drive**
**Cupertino California 95014 (US)**

(74) Representative: **Horton, Andrew Robert Grant et al, BOULT, WADE & TENNANT 27 Furnival Street London, EC4A 1PQ (GB)**

Courier Press, Leamington Spa, England.

## Method and apparatus for measuring gas, including standardisation

This invention relates to an apparatus and methods for measuring a quantity of gas and in particular to an improved technique of standardisation. The invention is particularly though not exclusively intended for the measurement of exhaust gases produced by combustion.

Apparatus for measuring gases, particularly the products of combustion, are known, from for example US—A—4076425. Gas measuring apparatus often operates in harsh environments and in inaccessible locations. They are particularly subject to aging or drift in components and the accumulation of dirt and to operate effectively they ought to incorporate their own means of standardisation or calibration. It has been proposed, in US—A—3836237 to use air curtains to keep a viewing window clean and it is known to correct aging of lamps and drift in electronic circuits, as proposed in US—A—3838925 and 4076425. Nevertheless, standardisation or calibration is not satisfactorily obtained by those proposals.

US—A—3895233 discloses a gas analyzer for determining the concentration of a constituent gas in a mixture of gases carrying solid particulate matter in suspension. The analyzer includes a first and a second radiation source which emit radiation of different wavelengths having different absorption coefficients for the constituent gas but virtually identical absorption coefficients for the solid particulate matter. The radiation beams are enclosed by a housing provided with apertures which permit gas to enter the housing.

DE—A—2430672 discloses an apparatus for the calibration of a device for the optical measurement of density of gas in a gas flue which exhibits pipe fittings facing one another on the outer ends of which an emitter and a receiver (or a reflector) are located, a calibration tube being held in the pipe fittings and capable of being inserted into the gas flue via a pipe fitting, thereby protecting the beam path from the flue gases.

CH—A—567721 discloses a procedure, and a device for implementing that procedure, for monitoring the suspended particle content in a medium moving along a flow path by means of a stationary radiation absorption measuring device including a measuring beam which passes through the flow path. The device includes a beam source and a beam receiver, which beam receiver controls an indicating device in accordance with the intensity of the beam which strikes the receiver.

The general object of the present invention is to facilitate the improved measurement of gases and its particular object is the provision of apparatus which can be more effectively calibrated than hitherto.

The present invention accordingly provides apparatus for measuring or monitoring a gas, including a source of a beam of radiation which is directed to impinge on a detector; and a housing for enclosing the beam, the housing including at least two apertures which permit the gas to enter the housing; characterized by means for calibrating the apparatus without obstructing the radiation beam, said means including doors or a set of partial doors coupled to the housing for opening and closing the apertures; and means for purging the gas from the housing.

The present invention further provides apparatus for measuring or monitoring a gas, including a source of a beam of radiation which is directed to impinge on a detector; and a housing for enclosing the beam, the housing including at least two apertures which permit the gas to enter the housing to intercept the beam and to leave the housing; characterized by means for calibrating the apparatus without obstructing the radiation beam, said means including:

a) means for opening and closing the apertures including an inner member which is disposed within the housing and has apertures which can be brought into and out of register with the apertures of the housing by relative movement of the housing and the member; and

b) means for purging the gas from the inner member.

It will be explained hereinafter how such apparatus may be used to perform the methods of measuring according to the present invention.

In the accompanying drawings:

Figure 1 is a side view of one embodiment of gas measuring apparatus according to the present invention;

Figure 2A and 2B are cross-sectional views of the apparatus of Figure 1 taken along the plane 2—2;

Figure 3 is a pictorial representation of the use of apparatus according to the invention to monitor exhaust gases;

Figure 4 is a graph of the absorption spectrum of a typical gas as a function of frequency;

Figure 5 is a side view of another embodiment of apparatus according to the invention;

Figure 6A and 6B are cross-sectional views taken along the plane 6—6 in Figure 5;

Figure 7 is a cross-sectional view illustrating a variant of the apparatus shown in Figure 5; and

Figure 8 is a perspective view illustrating another variant of the embodiment of Figure 5.

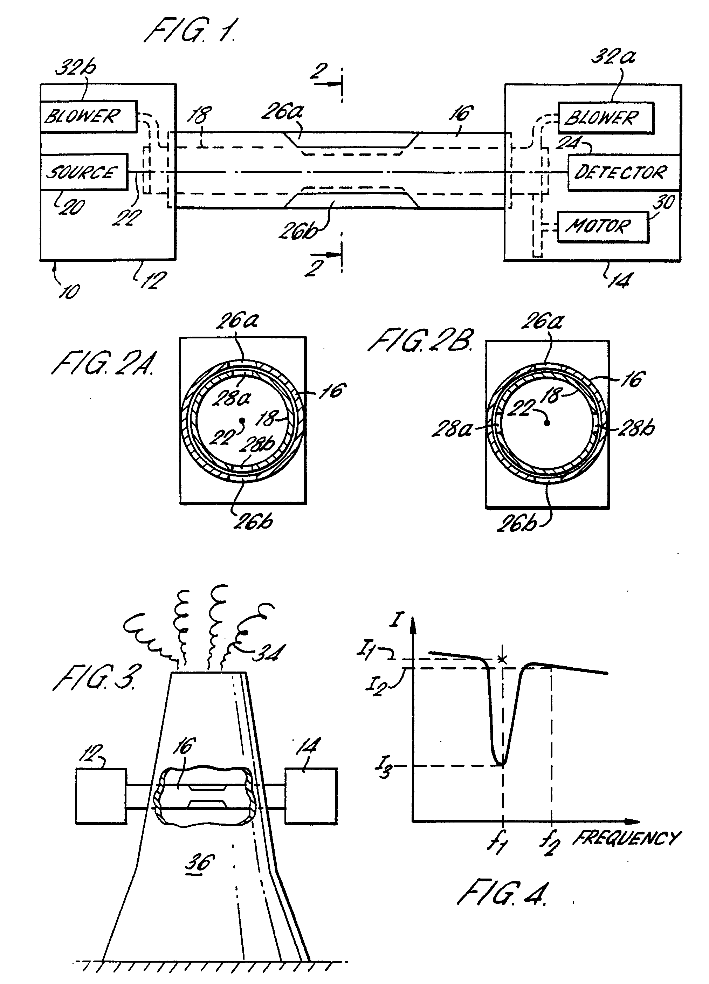

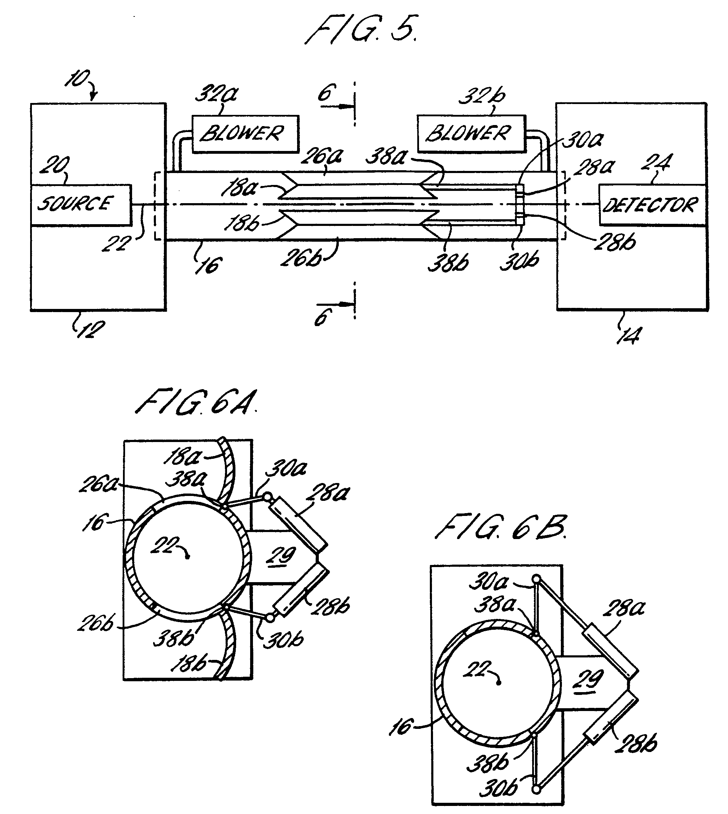

In Figure 1 is shown one embodiment of a gas measuring apparatus. The apparatus 10 comprises a first enclosure 12, a second enclosure 14 and a hollow tube 16 which extends between and connects the two enclosures 12 and 14. Within the tube 16 is an inner hollow tube 18. Inside the first enclosure 12 is a source 20 which is capable of emitting a beam of radiation which is aligned to pass through the inner tube 18 so as to impinge on a detector 24 disposed in the second enclosure 14. The outer tube 16 has various apertures of which only two. the apertures 26a and 26b are shown. These two apertures are located on opposite sides of the outer tube 16; when the apertures are effectively open, gas may enter the tube through one of them, for example the aperture 26b intercept the beam 22 and leave by another aperture, for example the aperture 26a. the inner tube 18 is rotatable relative to the outer tube and also contains various apertures which can be brought into register with corresponding apertures in the outer tube 16. As is illustrated in Figure 2A, apertures 28 and 28b of the inner tube are in register with the corresponding apertures 26a and 26b of the outer tube. When the tubes are relatively disposed as shown in Figure 2A, gas may enter the inner tube and leave it. When the tubes are disposed as shown in Figure 2B, the apertures in the inner tube are all out of register with the apertures in the outer tube; the inner tube is then effectively closed so that substantially no gas can enter the inner tube and intercept the beam 22. The inner tube can be moved relative to the outer tube to bring the various apertures into and out of register and for this purpose a motor 30 disposed in the second housing is connected for rotating the inner tube 18. Blowers 32a and 32b communicate with the ends of the tube 18 and operate to purge gas from the inside of the inner tube 18.

As will become apparent, different forms of housing may be used to enclose the beam and different means of closure can be used for the apertures aforementioned.

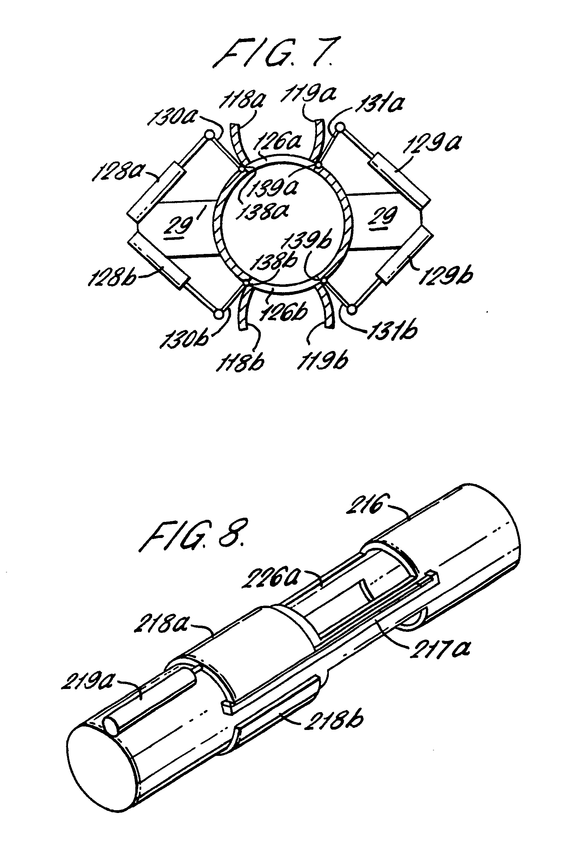

The apparatus 10 may be used to monitor exhaust gas 34 of combustion from a chimney 36, as shown in Figure 3. Preferably the enclosures 12 and 14 are on opposite sides of the chimney 36 and the tube 16 passes through the chimney 36. The apparatus may be used to monitor the exhaust gas to ensure that any pollution produced by the gas does not exceed amounts specified in relevant enactments or regulations. For such a purpose the source 20 might emit a beam of invisible light and the apparatus could be used merely to sense opacity of the exhaust gas. Preferably however the apparatus is used to make more precise measurements of the gas and is calibrated according to the method now to be described.

Figure 4 is a graph showing absorption against frequency for a typical gas. Preferably the source 20 emits a beam of radiation (at a frequency $f_1$) which is absorbed by the gas 34 as the beam passes through the gas let into the tubular housing. Accordingly, the beam's intensity as measured by the detector depends on the degree of absorption, the lower the intensity of the beam received by the detector, the greater the absorption and *vice versa*. The measured intensity for the gas 34 illuminated by radiation at the frequency $f_1$ is shown by $I_3$ (Figure 4). During measurement of that intensity, the apertures in the tubes have been open. They are then closed and the gas 34 is purged from the inner tube by the blowers. The gas may then be supplanted by a different gas, such as the atmosphere, which permits substantially all the radiant energy of the beam 22 to pass without absorption. A second measurement of intensity (in the presence of atmospheric gas) yields, for example, the value of $I_1$. The amount of gas that was in the second tube may be calculated from the measurements of intensity $I_1$ and $I_3$ in accordance with Beer's law, as follows: $I_3 = I_1 \exp(-\mu cL)$ or $c = 1/\mu L \ Ln \ I_1/I_3$, where $\mu$ is the absorption coefficient, c is the concentration of gas (in parts per million) and L is the beam's path length in the gas.

The frequency $f_1$ may be in the infra-red region; the particular curve shown in Figure 4 is the absorption spectrum of carbon dioxide. One advantage of the present invention is that the reference measurement, that is to say the measurement made without absorption by the particular gas which is monitored, can be performed under substantially the same conditions as the test measurement. Except for the removal of the monitored gas the reference measurement uses the same source and measuring equipment, the same path for the radiant beam and is subject to the same environment as the test measurement.

By way of comparison, it may be mentioned, with reference to Figure 4, that it has been the practice hitherto to calibrate apparatus by making measurements of two different frequencies, of which one is absorbed by the gas under test and another frequency, $f_2$, which is not absorbed. The measured intensity of the radiation after it passes through the gas is, for the latter frequency, $I_2$ and calculation of the amount of gas in the tube may be based upon $I_2$ and $I_3$ in accordance with Beer's law, on the assumption that $I_2$ is the same as $I_1$. However, even if radiant energy at the second frequency is not absorbed at all by the gas 34, the performance of the measuring equipment may well be different at the frequency $F_2$ than it is at the frequency $f_1$.

Even so, the former method of measurement, using two frequencies, may be improved according to the present invention. In order to standardise the value of $I_2$, the apertures 26a and 26b of the first tube may be closed as hereinbefore described. The gas 34 is purged from the inner tube 18. The source 20 emits a beam of radiation at a first frequency $f_1$ which is absorbed by the gas 34 and a second frequency $f_2$ which is not absorbed by the gas 34.

The detector measures the intensities $I_1$ and $I_2$ to provide a normalising factor K given by $K=I_1/I_2$.

Thereafter, in the measurement of the amount of gas 34 in the first tube using a first frequency $f_1$ and a second frequency $f_2$, the calculation of the amount of gas 34 that is in the first tube is based upon $I_3$, $I_2$ and K in accordance with $I_3=K\,I_2\exp(-ucL)$ in the manner previously described.

In this particular method, the apertures need not be closed for every measurement. The closure of the outer tube 18 is required only for deriving the normalising factor K.

Figures 5A and 5B illustrate another embodiment of the apparatus according to the invention. As before, the apparatus 10 comprises two enclosures 12 and 14 which are connected by a hollow tube 16. The source 20 is disposed inside the enclosure 12 and emits radiant energy in the form of a beam which impinges on the detector 24 disposed in the second enclosure 14. Blowers 32a and 32b are connected to respective ends of the tube 16.

In this embodiment of the invention there is no inner tube. Instead, the tube 16 has apertures, of which only the apertures 26a and 26b are shown, and each aperture has a respective door. The doors 18a and 18b are illustrated for the apertures 26a and 26b respectively. Each door has a hinge (38a and 38b respectively) and can pivot about the hinge to close the respective aperture. A stand 29 carried by the tube 16 provides mounting for pneumatic actuators 28a and 28b respectively of which the pistons are connected by connecting rods 30a and 30b to the hinges 38a and 38b respectively. Figures 6A and 6B illustrate the doors 18a and 18b in their open and closed positions respectively.

In another embodiment, each aperture may have two half doors. For example, in the embodiment shown in Figure 7, the aperture 126a is closable by means of two half doors 118a and 119a mounted on hinges 138a and 139a respectively. These hinges are rotatable by connecting rods 130a and 131a operable by the pneumatic actuators 128a and 129a respectively. A similar mechanism (of which the parts are distinguished by the suffix b) is provided for the aperture 126b.

In yet another embodiment of the invention, the doors for the apertures are slidable. As is shown in Figure 8, doors 218a and 218b are provided for the respective apertures 226a and 226b, corresponding to the apertures 26a and 26b in Figures 2A and 2B. Each door 218a and 218b is closely adjacent the tube 216. The door 218a is capable of sliding along a track 217a and under the force of a pneumatic actuator 219a to open and close the aperture 226a as required. A similar arrangement may be provided for the door 218b.

## Claims

1. Apparatus for measuring or monitoring a gas, including a source (20) of a beam of radiation (22) which is directed to impinge on a detector (24); and a housing (16) for enclosing the beam, the housing including at least two apertures (26a, 26b) which permit the gas to enter the housing to intercept the beam and to leave the housing; characterized by means for calibrating the apparatus without obstructing the radiation beam, said means including doors (18a, 18b) or a set of partial doors (118a, 119a and 118b, 119b or 218a and 218b) coupled to the housing for opening and closing the apertures; and means (32a, 32b) for purging the gas from the housing.

2. Apparatus for measuring or monitoring a gas, including a source (20) of a beam of radiation (22) which is directed to impinge on a detector (24); and a housing (16) for enclosing the beam, the housing including at least two apertures (26a, 26b) which permit the gas to enter the housing to intercept the beam and to leave the housing; characterized by means for calibrating the apparatus without obstructing the radiation beam, said means including:

a) means for opening and closing the apertures including an inner member (18) which is disposed within the housing (16) and has apertures which can be brought into and out of register with the apertures of the housing by relative movement of the housing and the member; and

b) means (32a, 32b) for purging the gas from the inner member (18).

3. Apparatus according to claim 1 or 2 in which the housing comprises a tube.

4. Apparatus according to claim 3 in which the said at least two apertures are on opposite sides of the tube (16).

5. Apparatus according to claim 3 or claim 4 as appendant to claim 2 in which the means for opening and closing the apertures comprises an inner tube (18) which is disposed within the first tube (16) and has apertures which can be brought into and out of register with the apertures of the first-mentioned tube by relative movement of the tubes.

6. Apparatus according to claim 1 in which each door, or each door in a set, is a hinged door.

7. Apparatus according to claim 1 in which each door is a sliding door.

8. Apparatus according to claim 6 or 7 in which each door is disposed outside the tube.

9. Apparatus according to any foregoing claim in which the housing extends across a chimney such that combination gases in said chimney can flow into and out of the housing when the apertures are open.

10. A method of monitoring a gas, employing apparatus according to any of claims 1 to 9 adapted to operate at a particular frequency, the method comprising measuring at the particular frequency the intensity of radiation received through said gas while said apertures are closed and the intensity of radiation at said frequency received by said detector through a second gas, which does not significantly absorb the said radiation.

11. A method of monitoring a gas, employing apparatus according to any of claims 1 to 9, adapted to operate at two different frequencies, the method comprising closing said apertures, purging the housing of said gas, measuring the intensity of radiation received by the detector at two frequencies, at one of which the radiation would be absorbed by the gas and at the other of which the radiation would not be significantly absorbed by the gas, so as to provide a normalising factor, opening said apertures, and measuring at said two frequencies the intensity of radiation received by said detector through the gas.

**Patentansprüche**

1. Vorrichtung zum Messen oder Überwachen eines Gases mit einer Quelle (20) zur Erzeugung eines Strahlenbündels (22), welches so gerichtet ist, daß es auf einen Detektor (24) auftrifft, und mit einem das Strahlungsbündel umschließenden Gehäuse (16), welches mindestens zwei Öffnungen (26a, 26b) aufweist, die dem Gas den Eintritt in das Gehäuse, ein Kreuzen des Strahlenbündels und den Austritt aus dem Gehäuse erlauben, gekennzeichnet durch eine Vorrichtung zum Eichen des Geräts ohne Behinderung des Strahlenbündels, welche Türen (18a, 18b) oder einen Satz von Teiltüren (118a, 119a und 118b, 119b oder 218a und 218b) aufweist, die mit dem Gehäuse verbunden sind, um die Öffnungen öffnen oder schließen zu können, und eine Vorrichtung (32a, 32b) zum Abziehen des Gases vom Gehäuse.

2. Vorrichtung zum Messen oder Überwachen eines Gases mit einer Quelle (20) zur Erzeugung eines Strahlenbündels (22), welches so gerichtet ist, daß es auf einen Detektor (24) auftrifft, und mit einem das Strahlenbündel umschließenden Gehäuse (16), welches mindestens zwei Öffnungen (26a, 26b) aufweist, die dem Gas den Eintritt in das Gehäuse, ein Kreuzen des Strahlenbündels und den Austritt aus dem Gehäuse erlauben, gekennzeichnet durch eine Vorrichtung zum Eichen des Geräts ohne Behinderung des Strahlenbündels, welche enthält:

a) eine Vorrichtung zum Öffnen und Schließen der Öffnungen, welche ein inneres Teil enthält, welches innerhalb des Gehäuses (16) angeordnet ist und Öffnungen aufweist, die durch eine Relativbewegung zwischen Gehäuse und dem Teil in eine und aus einer fluchtenden Stellung mit den Öffnungen des Gehäuses gebracht werden können; und

b) eine Vorrichtung (32a, 32b) zum Abziehen des Gases vom inneren Teil (18).

3. Vorrichtung nach Anspruch 1 oder 2, dadurch gekennzeichnet, daß das Gehäuse ein Rohr aufweist.

4. Vorrichtung nach Anspruch 3, dadurch gekennzeichnet, daß mindestens zwei Öffnungen auf gegenüberliegenden Seiten des Rohres (16) angeordnet sind.

5. Vorrichtung nach Anspruch 2 und 3 oder 2 und 4, dadurch gekennzeichnet, daß die Vorrichtung zum Öffnen und Schließen der Öffnungen ein inneres Rohr (18) aufweist, welches innerhalb des ersten Rohres (16) angeordnet ist und Öffnungen aufweist, die durch eine Relativbewegung der Rohre in eine und aus einer übereinstimmenden Stellung mit den Öffnung des ersten Rohres gebracht werden können.

6. Vorrichtung nach Anspruch 1, dadurch gekennzeichnet, daß jede Tür oder jede Tür in einem Satz von Türen eine Klapptür ist.

7. Vorrichtung nach Anspruch 1, dadurch gekennzeichnet, dass jede Tür eine Schiebetür ist.

8. Vorrichtung nach Anspruch 6 oder 7, dadurch gekennzeichnet, dass jede Tür ausserhalb des Rohres angeordnet ist.

9. Vorrichtung nach einem der vorangehenden Ansprüche, dadurch gekennzeichnet, daß das Gehäuse sich durch einen Schornstein hindurch erstreckt, so daß Verbrennungsabgase in diesem Schornstein in das Gehäuse und aus dem Gehäuse fließen können, wenn die Öffnungen offen sind.

10. Ein Verfahren zum Überwachen eines Gases unter Verwendung einer Vorrichtung nach einem der Ansprüche 1 bis 9, welche bei einer bestimmten Frequenz arbeiten kann, gekennzeichnet durch die Verfahrensschritte: Messen der Strahlungsintensität, die durch das Gas hindurch empfangen wird, bei der bestimmten Frequenz, während die Öffnungen geschlossen sind und Messen der Intensität der Strahlung, die vom Detektor durch ein zweites Gas empfangen wird, welches die Strahlung nicht wesentlich absorbiert, bei der Frequenz.

11. Ein Verfahren zum Überwachen eines Gases unter Verwendung einer Vorrichtung nach einem der Ansprüche 1 bis 9, welche bei zwei verschiedenen Frequenzen arbeiten kann, gekennzeichnet durch die Verfahrensschritte: Schließen der Öffnungen, Reinigen des Gehäuses vom Gas, Messen der Strahlungsintensität, die vom Detektor empfangen wird, bei zwei Frequenzen, wobei bei der einen Frequenz die Strahlung durch das Gas absorbiert wird und bei der anderen die Strahlung nicht erheblich vom Gas absorbiert wird, um so einen Normierungsfaktor zu schaffen, Öffnen der Öffnungen und Messen der Strahlungsintensität, welche vom Detektor durch das Gas hindurch empfangen wird, bei zwei Frequenzen.

## Revendications

1. Appareil à mesurer ou à contrôler un gaz comprenant une source (20) de faisceau de rayons (22) qui est dirigée de manière à atteindre un détecteur (24) et une enveloppe (16) servant à enfermer le faisceau, l'enveloppe comprenant au moins deux ouvertures (26a, 26b) qui permettant au gaz d'entrer dans l'enveloppe pour intercepter le faisceau et de quitter l'enveloppe, caractérisé par des moyens servant à étanlonner l'appareil sans obstruer le faisceau de rayons, ces moyens comprenant des portes (18a, 18b) ou un jeu de portes partielles (118a, 119a et 118b, 119b ou 218a et 218b) accouplées à l'enveloppe pour ouvrir et fermer les ouvertures, et des moyens (32a, 32b) servant à purger le gaz de l'enveloppe.

2. Appareil à mesurer ou à contrôler un gaz comprenant une source (20) de faisceau de rayons (22) qui est dirigée de manière à atteindre un détecteur (24) et une enveloppe (16) servant à enfermer le faisceau, l'enveloppe comprenant au moins deux ouvertures (26a, 26b) qui permettent au gaz d'entrer dans l'enveloppe pour intercepter le faisceau et de quitter l'enveloppe, caractérisé par des moyens servant à étalonner l'appareil sans obstruer le faisceau de rayons, ces moyens comprenant:

a) des moyens servant à ouvrir et à fermer les ouvertures, comprenant un élément intérieur (18) qui est disposé à l'intérieur de l'enveloppe (16) et présente des ouvertures que l'on peut amener à s'aligner et à cesser de s'aligner sur les ouvertures de l'enveloppe par mouvement relatif de l'enveloppe et de l'élément, et
b) des moyens (32a, 32b) servant à purger le gaz de l'élément intérieur (18).

3. Appareil selon l'une des revendications 1 et 2, dans lequel l'enveloppe comprend un tube.
4. Appareil selon la revendication 3, dans lequel les deux ou plusieurs ouvertures sont sur des côtés opposés du tube (16).

5. Appareil selon l'une des revendications 2 et 4, dans lequel les moyens d'ouverture et de fermeture des ouvertures comprennent un tube intérieur (18) qui est disposé à l'intérieur du premier tube (16) et présente des ouvertures qui peuvent être amenées à s'aligner et à cesser de s'aligner sur les ouvertures du premier tube mentionné par mouvement relatif des tubes.
6. Appareil selon la revendication 1, dans lequel chaque porte, ou chaque porte d'un jeu, est une porte à charnière.
7. Appareil selon la revendication 1, dans lequel chaque porte est une porte coulissante.
8. Appareil selon l'une des revendications 6 et 7, dans lequel chaque porte est disposée à l'extérieur du tube.
9. Appareil selon l'une quelconque des revendications précédentes, dans lequel l'enveloppe s'étend en travers d'une cheminée de sorte que des gaz de combustion qui se trouvent dans la cheminée peuvent entrer dans l'enveloppe et en sortir quand les ouvertures sont ouvertes.

10. Procédé de contrôle d'un gaz utilisant un appareil selon l'une quelconque des revendications 1 à 9, conçu pour fonctionner à une fréquence particulière, le procédé consistant à mesurer, à la fréquence particulière, l'intensité de rayonnement reçue à travers le gaz pendant que les ouvertures sont fermées et l'intensité de rayonnement à cette fréquence reçue par le détecteur à travers un deuxième gaz qui n'absorbe pas notablement les rayons.

11. Procédé de contrôle d'un gaz utilisant un appareil selon l'une quelconque des revendications 1 à 9, conçu pour fonctionner à deux fréquences différentes, le procédé consistant à fermer les ouvertures, à purger l'enveloppe du gaz, à mesurer l'intensité de rayonnement reçue par le détecteur aux deux fréquences à l'une desquelles le rayonnement serait absorbé par le gaz et à l'autre desquelles le rayonnement ne serait pas notablement absorbé par le gaz, de manière à fournir un facteur de normalisation, à ouvrir les ouvertures et à mesurer aux deux fréquences mentionnées l'intensité de rayonnement reçue par le détecteur à travers le gaz.

*FIG. 1.*

*FIG. 2A.*

*FIG. 2B.*

*FIG. 3.*

*FIG. 4.*

# FIG. 5.

# FIG. 6A.

# FIG. 6B.

FIG. 7.

FIG. 8.